# EUROPEAN PATENT SPECIFICATION

(11) **EP 0 684 612 B1**
(45) Date of publication and mention of the grant of the patent: **10.03.1999**
(21) Application number: 95302760.4
(22) Date of filing: 25.04.1995
(51) Int. Cl.: G21C 17/07

(54) **Leak-detection system and method for detecting an individual leaking nuclear fuel rod having radioactive material leaking therefrom**
System und Verfahren zur Erkennung eines einzelnen lecken Kernbrennstabs mit hieraus auslaufenden radioaktiven Stoffen
Système et procédé de détection de fuite permettant de détecter individuellement un barreau de combustible nucléaire duquel s'échappent des matières radioactives

(30) Priority: 25.04.1994 US 232967
(43) Date of publication of application: 29.11.1995
(73) Proprietor: WESTINGHOUSE ELECTRIC CORPORATION, Pittsburgh Pennsylvania 15222 (US)
(72) Inventor: Tolino, Ralph Walter, Pittsburgh,Pennsylvania 15221 (US)
(74) Representative: van Berlyn, Ronald Gilbert

(56) References cited:
- DD-A- 292 710
- FR-A- 2 272 467
- FR-A- 2 304 150
- FR-A- 2 315 148
- US-A- 3 878 040
- US-A- 4 696 788

## Description

This invention generally relates to leak detection and more particularly relates to a leak-detection system and method for detecting an individual leaking nuclear fuel rod having radioactive material leaking therefrom.

It is known that fuel rods typically used in nuclear reactors may occasionally leak. Such leaking fuel rods are undesirable because leaking fuel rods may release radioactive fission product material (e.g., Xenon-135 and Kr-85) into the liquid moderator coolant flowing over the fuel rods, thereby radioactively contaminating reactor system components in fluid communication with the coolant. Increased levels of radioactive contamination in reactor system components increases the time required for servicing the components because the components are typically decontaminated prior to servicing in order to reduce radiation exposure to service personnel. Moreover, leaking fuel rods increase the risk of discharging higher than desirable amounts of radioactivity into the environment surrounding the nuclear reactor when fission gases leaking from the fuel rods are released through an off-gas system associated with the nuclear reactor. Therefore, in order to avoid undesirable radioactive contamination of reactor system components and the environment surrounding the reactor, it is important to detect and replace any leaking fuel rods. If a leaking fuel rod is detected, it is replaced with a non-leaking fuel rod or with a solid stainless steel "dummy" rod.

The previously mentioned nuclear fuel rods are bundled together in a plurality of fuel assemblies. Although it is possible to detect whether an individual fuel assembly has one or more leaking fuel rods, it is undesirable to discard the entire fuel assembly because not all the fuel rods therein may be leaking. Discarding the entire fuel assembly when only some of the fuel rods are leaking results in a severe economic penalty for the reactor operator because many non-leaking fuel rods are discarded together with the relatively fewer leaking fuel rods. Therefore, it is important that the entire fuel assembly not be discarded when only some of the fuel rods therein are leaking.

Moreover, applicant has discovered that in the case where the breach in the fuel rod is a small-sized "hairline" crack, such a crack may inhibit the proper detection of a leaking fuel rod. This is so because such a "hairline" crack may intermittently open and close due, for example, to alternating thermal expansion and contraction of the fuel rod. Thus, such a leaking fuel rod may not be detected if it is inspected while the hairline crack is closed. It is important to detect such a leaking fuel rod even when the breach therein intermittently opens and closes.

A prior art method for identifying a specific leaking fuel rod is to use ultrasonic examination to inspect each fuel rod within each fuel assembly when fuel rod leakage is suspected. By use of this method, an ultrasonic examination tool is inserted horizontally between the rows of fuel rods. Any coolant water present in the fuel rod or the vicinity of the inspection tool due to a breach therein will be detected by the ultrasonic inspection tool. Although ultrasonic examination has proved satisfactory, it is not entirely precise. That is, ultrasonic examination may obtain a "false positive" reading indicating a leaking fuel rod when no fuel rod has in fact leaked. Such a "false-positive" reading may be due, for example, to irregularities in the fuel rod cladding that surrounds the nuclear fuel in the fuel rod. Moreover, even if later visual examination confirms a "false positive" reading, common practice is for the reactor operator to nonetheless replace the suspect fuel rod as a precautionary measure, thereby resulting in an economic penalty. In addition, use of ultrasonic examination apparatus for this purpose is cumbersome, time consuming and therefore costly.

Prior art document FR-A-2315148 discloses a leak detection system for detecting an individual leaking fuel rod having radioactive fission material leaking from a breach in the fuel rod.

An object of the present invention is to provide a leak-detection system and method capable of detecting an individual leaking nuclear fuel rod having a small-sized "hair-line" crack through which the radioactive material only intermittently leaks.

The invention consists in a leak-detection system for detecting an individual leaking nuclear fuel rod having radioactive fission product material leaking from a breach in the fuel rod when the fuel rod is submerged in a pool of water, characterized by :
(a) an enclosure for defining a cavity for surrounding the fuel rod in the pool of water, the enclosure comprising a cylindrical member having an open end for receiving a portion of the fuel rod and a removably attachable cap defining a cavity with an open end for sealingly engaging the cylindrical member when the fuel rod extends into the cavity in the cap;
(b) a fluid circulation circuit connected to said enclosure for expulsing the water from the enclosure and circulating a gaseous fluid through said water-expulsed enclosure so that the fluid circulating through said enclosure entrains the leaking material and carries the leaking material from the fuel rod; and
(c) detector assembly in fluid communication with the fluid circulating through said circuit for detecting the material carried by the fluid, so that said detector assembly detects the material leaking from the breach in the fuel rod.

The invention also consists in a leak-detection method for detecting an individual leaking nuclear fuel rod having radioactive fission product material leaking therefrom, the fuel rod being submerged in a pool of water, characterized by the steps of:
(a) enclosing an individual fuel rod by sealingly engaging a removable cap extending over an end portion of the fuel rod with a cylindrical member containing the balance of the fuel rod for isolating the fuel rod within an enclosure from the pool of water in which the fuel rod is submerged;
(b) circulating a gaseous fluid through the enclosure by operating a fluid circulation circuit connected to the enclosure, so that the water from the pool in the sealed enclosure is expulsed and fluid carries the leaking material from the fuel rod; and
(c) detecting the leaking material carried by the fluid by operating a detector assembly in communication with the fluid.

A feature of the present invention is the provision of a suitable enclosure surrounding an individual fuel rod for sealingly enclosing the fuel rod therein.

Another feature of the present invention is the provision of a fluid circulation circuit connected to the enclosure for circulating a fluid through the enclosure, so that the fluid entrains the radioactive material leaking from the fuel rod and carries the radioactive material from the fuel rod to a radiation detector for detecting the radioactive material in the fluid.

An advantage of the present invention is that the quantity, type, and rate of leakage of fission product material leaking from an individual leaking nuclear fuel rod is now precisely ascertainable.

Another advantage of the present invention is that costs associated with identifying individual leaking fuel rods are reduced.

These and other objects, features and advantages of the present invention will become evident to those having ordinary skill in the art upon a reading of the following detailed description taken in conjunction with the accompanying drawings wherein there is shown illustrative embodiments of the invention.

### BRIEF DESCRIPTION OF THE DRAWINGS

While the specification concludes with claims particularly pointing out and distinctly claiming the subject matter of the invention, it is believed the invention will be better understood from the following description, taken in conjunction with the accompanying drawings wherein:
Figure 1 shows in partial vertical section, a typical nuclear reactor pressure vessel with parts removed for clarity, the pressure vessel having a plurality of nuclear fuel assemblies disposed therein and also shows a nuclear fuel assembly storage rack disposed in a spent fuel storage pool located near the pressure vessel, the storage rack having the system of the invention mounted thereon and a preselected one of the fuel assemblies stored therein;
Figure 2 is a view in full elevation of an enclosure surrounding the preselected one of the fuel rods to be leak tested and a support frame connected to the enclosure for supporting the enclosure, the support frame being mounted atop the spent fuel storage rack;
Figure 3 is a view in partial elevation of the enclosure and the support frame;
Figure 4 is a fragmentation view of a failed fuel rod having a breach therein leaking radioactive fission product material, the fuel rod being surrounded by a portion of the enclosure; and
Figure 5 illustrates a fluid circulation circuit capable of being connected to the enclosure for circulating a fluid (e.g., air and/or water) through the enclosure for entraining the fission product material leaking from the fuel rod and also illustrates detector means in communication with the fluid circulation circuit for detecting the radioactive fission product material in the fluid circulation circuit.

### DESCRIPTION OF THE PREFERRED EMBODIMENT

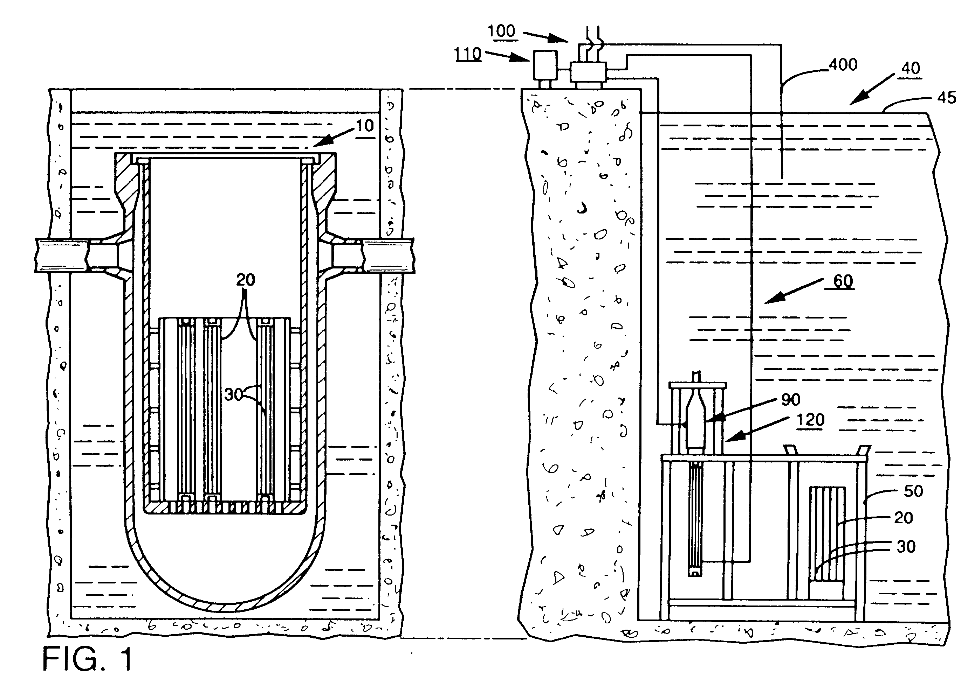

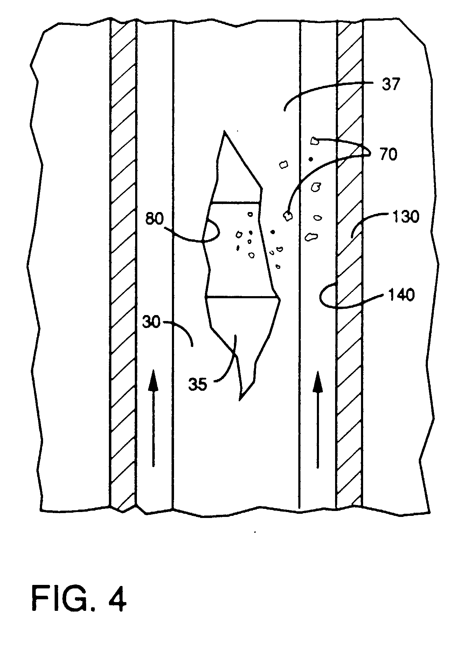

Referring to Fig. 1, there is shown a typical nuclear reactor pressure vessel, generally referred to as 10. Pressure vessel 10 has a plurality of nuclear fuel assemblies 20 residing therein, each of the fuel assemblies 20 including a plurality of elongate nuclear fuel rods 30 containing nuclear fuel 35 (see Fig. 4).

Still referring to Fig. 1, a spent fuel storage pool, generally referred to as 40, is located near pressure vessel 10 for storing at least one of the fuel assemblies 20 therein. Storage pool 40 contains a volume of water 45 that acts as a biological shield for protecting service personnel from radiation emitted by fuel assembly 20, which service personnel may be located in the vicinity of storage pool 40. In this regard, fuel assembly 20 may be stored in a suitable spent fuel storage rack 50 of the type well-known in the art, the storage rack 50 being submerged in water 45. Such a fuel storage rack 50, which forms no part of the present invention, may include a skeleton structure 55 having a cell or fuel assembly receiving basket 57 for receiving one of the fuel assemblies 20 for storage.

With reference again to Fig. 1, there is shown the subject matter of the present invention, which is a leak-detection detection system, generally referred to as 60, for an individual leaking nuclear fuel rod 30 having a radioactive fission product material 70 (see Fig. 4) leaking from a breach 80 (see Fig. 4) in a casing or cladding structure 37 surrounding nuclear fuel 35. Such radioactive fission material 70 may be fission product gasses and/or solids, such as Xenon-135 or Krypton-85 accumulated in fuel rod 30 during operation of reactor pressure vessel 10. System 60 comprises enclosure means, generally referred to as 90, surrounding one of fuel rods 30 that has been removed from fuel assembly 20 for leak testing. Connected to enclosure means 90 is fluid circulation means, generally referred to as 100, for circulating a fluid through the enclosure means 90, so that the fluid entrains and carries the leaking material from fuel rod 30. The fluid may be air, nitrogen or the like for reasons disclosed in detail hereinbelow. In addition, detector means, generally referred to as 110, is in communication with the fluid for detecting the fission product material carried by the fluid flowing through circulation means 100. Moreover, support means, generally referred to as 120, is connected to enclosure means 90 for supporting enclosure means 90 when enclosure means 90 is mounted atop receiving basket 57. Each of the above mentioned major components of leak detection system 60 is described in more detail hereinbelow.

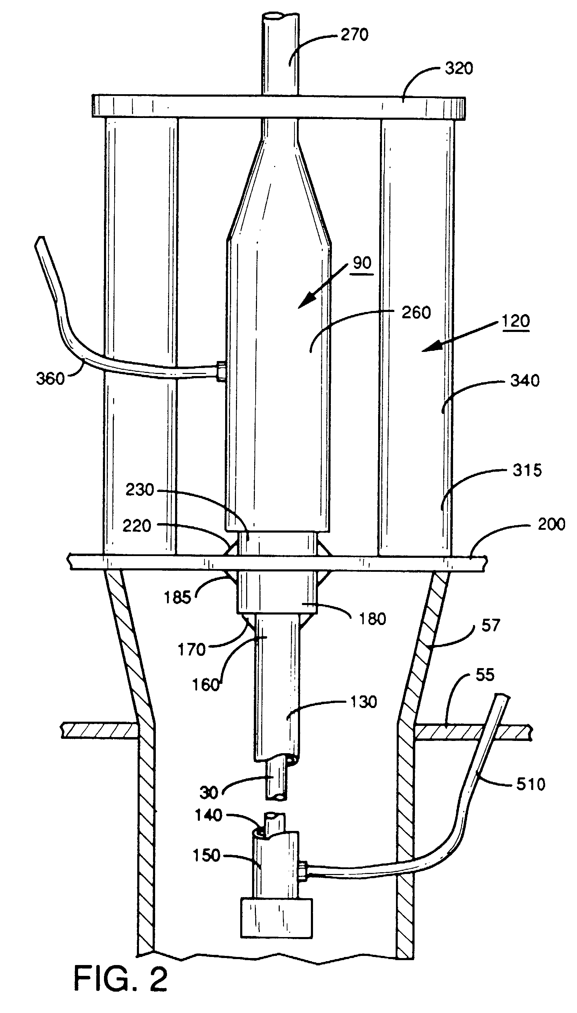

Referring to Figs. 2, 3 and 4, enclosure means 90 comprises an elongate isolation canister 130 defining a longitudinal blind bore 140 therein surrounding fuel rod 30. Blind bore 140 has a closed first end 150 and an open second end 160. Open second end 160 is sized to receive the fuel rod 30 therethrough that is to be leak tested. Canister 130 also includes an intake port 165 in communication with bore 140 for reasons disclosed hereinbelow. Sealingly attached to open end 160 of canister 130, such as by a circular weldment 170, is a generally cylindrical connector 180 having a longitudinal passage 190 coaxially aligned with blind bore 140 so that elongate fuel rod 30 can be extended through passage 190 and into bore 140. As described more fully hereinbelow, connector 180 is sealingly attached, such as by a circular weldment 185, to a base plate 200 belonging to support means 120. Base plate 200 itself has a transverse hole 210 for receiving fuel rod 30 and rests atop receiving basket 57 which belongs to skeleton structure 55. Sealingly attached to base plate 200, such as by a circular weldment 220, is a generally cylindrical coupler 230 having an externally threaded portion 240, for reasons disclosed hereinbelow. Coupler 230 defines a longitudinally extending channel 250 therein for receiving fuel rod 30. Moreover, a generally pyramidally-shaped cap 260 having an elongate integrally attached handle 270 is threadably connected to coupler 230, for reasons described in more detail presently. Cap 260 defines a cavity 280 therein having a closed end portion 290 and an internally threaded open end portion 300 for threadably engaging the external threads of coupler 230. Formed through cap 260 and in communication with cavity 280 is a laterally oriented suction port 295, for reasons disclosed hereinbelow. Thus, it will be appreciated from the description hereinabove, that when cap 260 is threaded onto coupler 230, the canister 130, connector 180, coupler 230 and cap 260 will enclose fuel rod 30 as fuel rod 30 extends from bore 140, through passage 190, through channel 250 and into cavity 280. Moreover, disposed in cavity 280 and interposed between coupler 230 and cap 260 may be seal means, such as an annular elastomeric seal 310 for maintaining coupler 230 and cap 260 in a seal-tight relationship, so that fuel rod 30 is sealingly isolated while enclosed in enclosure 90. It will be appreciated from the description hereinabove that as enclosure means 90 is assembled in the above manner to enclose fuel rod 30, an amount of the water 45 will become entrapped within enclosure means 90 (i.e., will fill bore 140, passage 190, channel 250 and cavity 280) because enclosure means 90 is assembled underwater (i.e., within storage pool 40) to protect service personnel from radiation emanating from fuel rod 30.

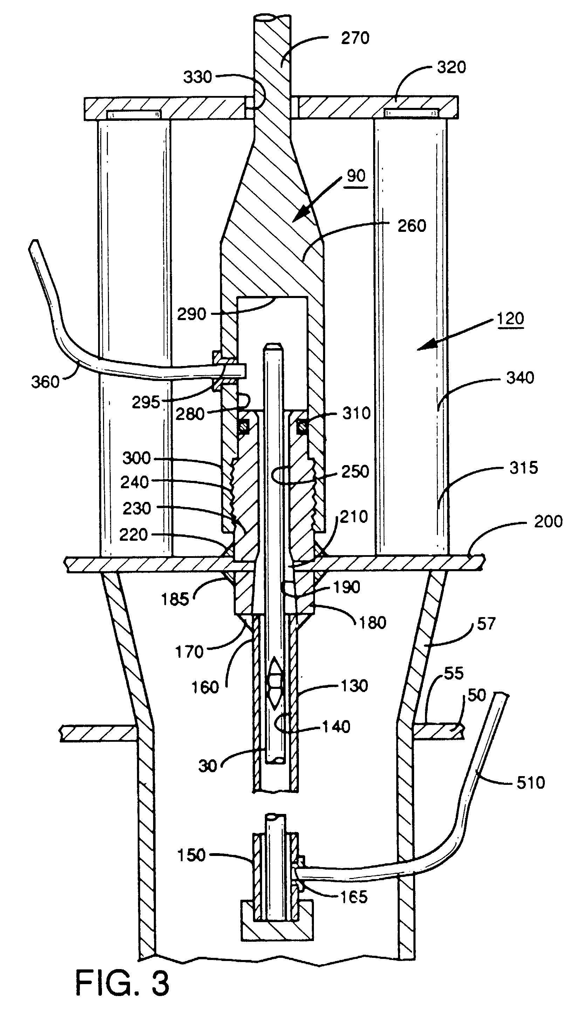

As best seen in Figs. 2 and 3, support means 120 includes a support frame 315 that comprises the previously mentioned base plate 200 which rests atop receiving basket 57. Support means 120 is thus mounted on fuel storage rack 50 as base plate 200 rests atop receiving basket 57. Disposed opposite base plate 200 and spaced-apart therefrom is an upper plate 320 having a transverse slot or hole 330 sized to receive elongate handle 270. The purpose of upper plate 320 is to provide support for a fuel rod handling tool (not shown) that is used to insert fuel rod 30 into canister 130. Interposed between base plate 200 and upper plate 320 is at least one support column 340 for providing structural rigidity to support frame 315 as the fuel rod handling tool inserts fuel rod 30 into canister 130.

Referring now to Figs. 2, 3 and 5, the previously mentioned fluid circulation means 100 includes a fluid circulation circuit 350 for circulating the fluid (e.g., air and/or water) through bore 140, passage 190, channel 250 and cavity 280. Circuit 350 will now be described in detail. In this regard, circuit 350 comprises a flexible first conduit 360 having an end thereof sealingly received in suction port 295 and the other end thereof connected to a separation tank 370 adapted to provide a volume for separating the air and water, for reasons disclosed presently. The purpose of tank 370 is to increase the volume on which vacuum is drawn and to provide means of ascertaining when the water has been forced from the system. Tank 370 has a transparent lid (not shown) for visually ascertaining when the water has been forced from the system and is used during a "water expulsion" mode of operation, as described in detail hereinbelow. A second conduit 380 interconnects tank 370 to a first valve 390. First valve 390 may be a so-called "four-way valve" for reasons disclosed in detail hereinbelow. Such a "four-way valve" may be of the type available from Whitney, a division of the Swagelock Company located in Highland Heights, Ohio, U.S.A. Connected to an outlet end of first valve 390 is a drain line or third conduit 400 having an end thereof terminating in spent fuel storage pool 40 for draining water into storage pool 40 during the "water expulsion" mode of operation, as described in detail hereinbelow. Also connected to first valve 390 is a fourth conduit 410 having an end thereof terminating in the atmosphere external to the reactor plant for venting air to the atmosphere during an "open-loop" mode of operation, as described in detail hereinbelow. Moreover, connected to first valve 390 is a fifth conduit 420 having an end thereof terminating at detector means 110. Connected to detector means 110 is a sixth conduit 430 having an end thereof connected to detector means 110 and the other end connected to a vacuum or suction pump 440. Suction pump 440 is capable of suctioning air from cavity 280 and through conduits 360/380/420/430 during the "open-loop" and "closed-loop" modes of operation, as described in detail hereinbelow.

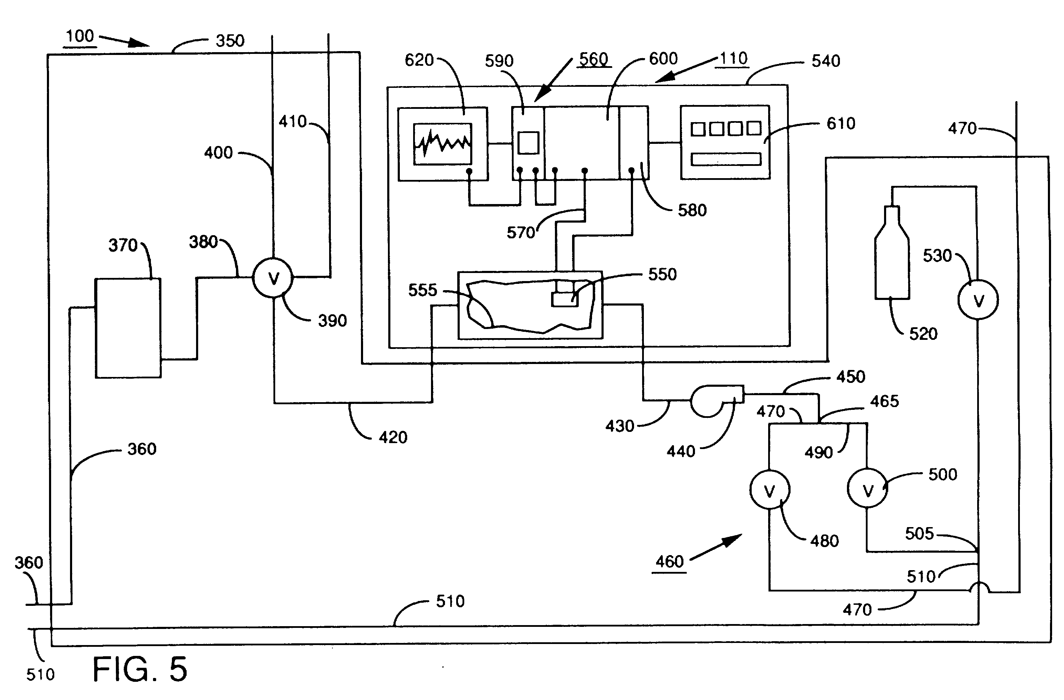

Still referring to Figs. 2, 3, and 5, a seventh conduit 450 connects pump 440 to a split flow circuit, generally referred to as 460. Seventh conduit 450 connects pump 440 to split flow circuit 460, as at intersection point 465. Split flow circuit 460 includes an eighth conduit 470 which extends from intersection point 465 to the atmosphere external to the reactor plant. A second valve 480 is interposed in eighth conduit 470 for controlling the flow of air through eighth conduit 470 during the "open-loop" mode of operation, as described in detail hereinbelow. Also extending from intersection point 465 is a ninth conduit 490 having a third valve 500 interposed therein for controlling the flow of gas through ninth conduit 490 during the "closed-loop" mode of operation, as described in detail hereinbelow. Ninth conduit 490 connects, as at intersection point 505, third valve 500 to a tenth conduit 510. Tenth conduit 510 has one end connected to a pressurized air reservoir 520 or air compressor for supplying the air under pressure to circulation circuit 350 during the "water expulsion" mode of operation, as described in detail hereinbelow. Reservoir 520 supplies pressurized air having a pressure of preferably between approximately 0.172 and 0.241 MPa (25 and 35 psia). The other end of tenth conduit 510 is received in intake port 165 for supplying the pressurized air to blind bore 140 defined by canister 130. It will be understood from the description hereinabove that conduit 510 connects to conduit 400 at intersection 505, as shown in Fig. 5. Interposed in tenth conduit 510 is a fourth valve 530 for controlling the flow of the air in tenth conduit 510.

Referring to Figs. 1 and 5, the previously mentioned detector means 110 includes a detector assembly 540 comprising a radiation-sensitive detector or sensor 550 sealingly housed in a sensor chamber 555 that is connected to suction pump 440, such as by the previously mentioned sixth conduit 430. Sensor 550 senses the radiation emitted by radioactive fission product material 70 as described more fully hereinbelow. Sensor 550 is adapted to generate a sensor output signal in response to the radiation sensed by sensor 550. An analyzer, generally referred to as 560, is electrically connected to sensor 550, such as by wiring 570, for receiving the sensor output signal and then providing an analysis of the sensor output signal. Analyzer 560 is adapted to generate an analyzer output signal associated with the analysis provided by analyzer 560. The analysis provided by analyzer 560 characterizes the activity of radionuclides sensed by sensor 550. In the preferred embodiment of the invention, a high voltage power supply 580 is electrically connected, such as by wiring 570, to sensor 550 for activating sensor 550. Sensor 550 is also electrically connected to an analog ratemeter 590 included in analyzer 560 for displaying the average counts per unit time (e.g., per second) of radiation detected by sensor 550. By use of ratemeter 590, the quantity or intensity of radiation from fission product material 70 in sensor chamber 555 is detected as a function of time. A suitable amplifier 600 electrically interconnects sensor 550 and ratemeter 590. The purpose of amplifier 600 is to generate a sensor output signal useable by ratemeter 590. Electrically connected to analyzer 560 may be a controller 610 for controlling the operation of analyzer 560. In addition, detector assembly 540 also comprises a display 620 that is electrically connected to analyzer 560 for receiving the analyzer output signal and for displaying the analyzer output signal received thereby. By use of display 620, the analysis provided by analyzer 560 is visually displayed to the operator of leak detection system 60. Detector assembly 540 may be what is commonly referred to in the art as a "flow-through" beta-gamma scintillation detector.

### OPERATION

Leak detection system 60 is capable of detecting leaks of radioactive fission product material 70 from an individual nuclear fuel rod 30. In this regard, when chemical analysis of the reactor core coolant indicates that one or more fuel rods 30 are leaking, each fuel assembly 20 is removed from pressure vessel 10 and preferably placed in spent fuel storage rack 50 which resides in spent fuel storage pool 40. Base plate 200, which belongs to support frame 315, and which has coupler 230, connector 180 and canister 130 connected thereto, is mounted atop an empty one of the receiving baskets 57 such that canister 130 is downwardly suspended into receiving basket 57. Fuel rod 30 to be leak tested is removed from the fuel assembly 20 in the usual manner and inserted through channel 250, through passage 190 and into blind bore 140 such that the lower end of fuel rod 30 rests on the bottom of canister 130. Fuel rod 30 may be manipulated through channel 250, passage 190 and into bore 140 by any convenient means customarily used in the art, such as by a suitable fuel rod gripper tool (not shown) capable of gripping fuel rod 30 and placing it into canister 130. The other end of fuel rod 30 not resting on the bottom of canister 130 projects above coupler 230 so that it may be later manipulated by the fuel rod gripping tool to extract it from canister 130 following the leak testing process.

Next, the previously mentioned internal threads belonging to open end 300 of cavity 280 are caused to threadably engage the external threads 240 of coupler 230 for threadably connecting cap 260 to coupler 230. The internal threads of cap 260 are caused to threadably engage external threads 240 such as by rotational manipulation of elongate handle 270, which is integrally formed with cap 260. Of course, as the internal threads of cavity 280 engage external threads 240, annular seal 310, which is interposed between cap 260 and coupler 230, sealingly engages the interior of cavity 280 for maintaining cap 260 and coupler 230 in a seal-tight relationship. In this manner, fuel rod 30 is sealingly isolated thereby. As shown in Figure 3, upper plate 320 is connected to support columns 340 such that handle 270 is received through slot or hole 330 formed in upper plate 320. An end of first conduit 360 is then attached to suction port 295 such that first conduit 360 is in communication with cavity 280 for suctioning the fluid (e.g., air and/or water) from cavity 280. Similarly, an end of tenth conduit 510 is attached to intake port 165 such that tenth conduit 510 is in communication with blind bore 140 for supplying pressurized air into blind bore 140.

When the above connections are made, leak detection system 60 is then used to perform the leak-detection of fuel rod 30 in accordance with the following modes of operation which may be performed sequentially: (a) "water expulsion" mode, (b) "open-loop" mode and (c) "recirculation" or "closed-loop" mode.

First, with respect to the "water expulsion" mode of operation, water 45 will reside within or fill bore 140, passage 190, channel 250 and cavity 280 after enclosure means 90 is assembled under water in the manner described hereinabove. Therefore, it is important to perform the water expulsion mode of operation in order to remove any water 45 residing in or filling enclosure means 90. This is important because any water 45 filling enclosure means 90 is preferably removed therefrom before performing the leak-testing of fuel rod 30 in order to create a gas-filled volume so that a vacuum may be created to induce fission product material 70 to leak. In this regard, "four-way" first valve 390 is opened to a first position to allow water 45 to drain from second conduit 360, through tank 370, through first valve 390 and into fourth conduit 400 and thence into storage pool 40. Also, when first valve 390 is opened to its first position, air in leak detection system 60 is in communication with the atmosphere through conduit 420, valve 390 and conduit 410. During the "water expulsion" mode of operation, second valve 480 and third valve 500 are closed and fourth valve 530 is opened. During the "water expulsion" mode of operation, suction pump 440 is not operated. As fourth valve 530 is opened, the pressurized air in reservoir 520 will flow through tenth conduit 510 and into bore 140. The pressurized air in reservoir 520 will then flow through passage 190, through channel 250 and into cavity 280 in order to force any water 45 therein into first conduit 360. This water 45 will be forced through first conduit 360 and into separation tank 370. The pressurized air will then force water 45 out separation tank 370 and into second conduit 380, whereupon the water 45 passes through first valve 390 and into fourth conduit 400 to be emptied into storage pool 40. In this manner, any water 45 residing in enclosure means 90 is expelled therefrom and exits into storage pool 40. The "water expulsion" mode is complete when substantially no water 45 exits fourth conduit 400. Moreover, completion of the "water expulsion" may also be ascertained by looking through the transparent top of tank 370 to confirm that no water is present in tank 370. As disclosed in detail hereinbelow, leak detection system 60 may then be operated in the "open-loop" or "closed-loop" mode of operation.

With respect to the "open-loop" mode of operation, "four-way" first valve 390 is moved to a second position that will connect conduit 380 to conduit 420 and conduit 400 to conduit 410. During the "open-loop" mode of operation, second valve 480 is opened and third valve 500 and fourth valve 530 are closed. During this "open-loop" mode of operation, suction pump 440 is operated to draw a vacuum of between approximately 558.8 and 609.6 mm (22 and 24 inches) of Hg in sixth conduit 430. As suction pump 440 is operated it will create a vacuum in sixth conduit 430 which in turn generates a vacuum in sensor chamber 555. Of course, it will be understood from the description hereinabove that as suction pump 440 operates to suction air through sixth conduit 430, the air will flow through suction pump 440 and into split-flow circuit 460. More specifically, as suction pump 440 operates, the air will flow into eighth conduit 470 and through second valve 480 interposed in eighth conduit 470 on its way to the atmosphere external to the reactor plant site. The vacuum in sensor chamber 555 generates a vacuum in fifth conduit 420 for drawing the air through first valve 390 and also generates a vacuum in second conduit 380. The vacuum in second conduit 380 causes a vacuum in separation tank 370 for drawing the air therefrom. The vacuum generated in separation tank 370 causes a vacuum to be created in first conduit 360 for suctioning the fission product 70 from cavity 260 defined by enclosure means 90. Of course, as the fission product is suctioned from cavity 280, it is simultaneously suctioned from channel 250, passage 190 and bore 140 for removing leaking fission product material 70 from the vicinity of fuel rod 30.

As an alternative to the "open-loop" mode of operation, leak detection system 60 may also be operated in the "recirculation" or "closed-loop" mode of operation, which is disclosed in detail presently. The "closed-loop" mode of operation is particularly useful to detect any fission product material 70 that may otherwise tend to "hide-out" within the interior of fuel rod 30. Such fission product material 70 may tend to "hide-out" within fuel rod 30 particularly when breach 80 is of small size (e.g., when breach 80 is a through-wall "hairline" crack). Such a "hairline" crack may otherwise inhibit the proper detection of the failed fuel rod 30. This is so because such a "hairline" crack may intermittently open and close due, for example, to alternating thermal expansion and contraction of fuel rod 30 as it resides in storage pool 40. As disclosed in detail presently, use of the invention allows detection of fuel rods having such "hairline" cracks. In this regard, the vacuum drawn in the system causes the fission product material 70 (i.e., fission product gases) in fuel rod 30 to seep out breach 80. The recirculating gas (e.g., air, nitrogen or the like) entrains fission product material 70 and carries it to detector assembly 540. Facilitating the release of fission product material 70 from fuel rod 30 in this manner enhances the accuracy of the leak detection method of the invention because fission product material 70 that may tend to "hide-out" with fuel rod 30 will be vacuumed therefrom. It will be appreciated from the description hereinabove that in the "recirculation" or "closed-loop" mode of operation, no fission product material 70 is released to the atmosphere or into storage pool 40; rather, the fission product material 70 is recirculated through enclosure means 90 and circulation means 100. An important advantage of operating leak detection system 60 in the "recirculation" or "closed-loop" mode is that it is possible to detect relatively small amounts of fission product material 70 released by "hairline" cracks or relatively small-sized breaches 80 in cladding 37 because the recirculation mode of operation allows small releases of fission product material 70 to accumulate within fluid circulation circuit 350 for detection during closed-loop operation.

Thus, with respect to the "closed-loop" mode of operation, leak detection system 60 is operated in the same manner as in the "open-loop" mode of operation, except that second valve 480 is closed and third valve 500 is opened for recirculating the air through fluid circulation circuit 350 and enclosure means 90.

However, in either the "open-loop" or the "closed-loop" mode of operation, the air having radioactive fission product material 70 entrained therein will flow through sensor chamber 555 to be sensed by radiation-sensitive sensor 550. In this regard, high voltage supply 580 is caused to supply electrical power to sensor 550 for activating sensor 550, so that sensor 555 detects the fission product material 70 in sensor chamber 555. As sensor 550 senses fission product material 70, it generates a sensor output signal. The output signal of sensor 550 is passed to analyzer 560 for analysis.

Amplifier 600, which belongs to analyzer 560, electrically interconnects sensor 550 to an analog ratemeter 590. Ratemeter 590 displays the average counts per unit time (e.g., per second) of radiation detected by sensor 555. In this manner, radiation emitted by fission product material 70 is characterized so that the quantity or intensity of radiation is detected as a function of time.

Controller 610, which is electrically connected to analyzer 560, controls the operation of analyzer 560. In addition, display 620, which is electrically connected to analyzer 560, receives the analyzer output signal and displays the analyzer output signal received thereby.

After fuel rod 30 is leak tested in the manner described hereinabove, it is removed from enclosure means 90 in substantially the reverse order of its placement into enclosure means 90. If fuel rod 30 is found to be leaking, it is stored in storage pool 40 for later disposal and a non-leaking fuel rod or a stainless steel "dummy" rod is substituted for it in fuel assembly 20. If fuel rod 30 is not found to be leaking, it is returned to fuel assembly 20. After all the suspect fuel rods in fuel assembly 20 have been suitably leak tested, fuel assembly 20 is reconstituted and then returned to pressure vessel 10 and another fuel assembly 20 is selected from pressure vessel 10 to leak test the fuel rods therein.

It will be appreciated from the description hereinabove that the system and method of the invention obtains several advantages. For example, it is now possible to precisely leak test each individual nuclear fuel rod within each fuel assembly. Another advantage obtained by use of the system and method of the invention is that it is now possible to precisely detect failed fuel rods even when such fuel rods have "hairline" cracks that would otherwise tend to obscure their detection.

Of course, it will be understood from the description hereinabove that leak-detection system 60 need not be limited to detecting leaks of fission product material from an individual nuclear fuel rod; rather, leak-detection system 60 including a detector suitable for the material being detected is usable for detecting leaks from any similar elongate container having detectable material leaking therefrom.

Therefore, what is provided is a leak -detection system and method for detecting an individual leaking nuclear fuel rod having a radioactive material leaking therefrom.

## Claims

1. A leak-detection system (60) for detecting an individual leaking nuclear fuel rod (30) having radioactive fission product material (70) leaking from a breach (80) in the fuel rod when the fuel rod is submerged in a pool of water (45), characterized by :
(a) an enclosure (90) for defining a cavity for surrounding the fuel rod (30) in the pool of water, the enclosure comprising a cylindrical member (130, 180, 230) having an open end (160) for receiving a portion of the fuel rod (30) and a removably attachable cap (260) defining a cavity (280) with an open end for sealingly engaging the cylindrical member (130,180,230) when the fuel rod (30) extends into the cavity (280) in the cap (260);
(b) a fluid circulation circuit. (350) connected to said enclosure for expulsing the water from the enclosure and circulating a gaseous fluid through said water-expulsed enclosure so that the fluid circulating through said enclosure entrains the leaking material and carries the leaking material from the fuel rod; and
(c) detector assembly (540) in fluid communication with the fluid circulating through said circuit for detecting the material carried by the fluid, so that said detector assembly detects the material leaking from the breach in the fuel rod.

2. The leak-detection system of claim 1, wherein said enclosure is characterized in that: the cylindrical member comprises
a) an elongate canister (130) defining a blind bore (140) therein surrounding the fuel rod, the blind bore having a closed end (150) and having an open end (160) for receiving the fuel rod through the open end; and
(b) a coupler (230) connected to the open end of the bore defined by said canister, said coupler defining a channel (250) therethrough for receiving the fuel rod and an external threaded portion (240);
said removably attachable cap (260) being threadably connnected to said coupler (230),
said cavity (280) having a closed end portion (290) and an internally threaded open end portion (300) for threadably engaging the external threads of said coupler, whereby said canister, said coupler and said cap cooperate to enclose the fuel rod as the fuel rod extends through the bore, through the channel and into the cavity.

3. The leak-detection system of claim 2, further characterized by a seal (310) interposed between said coupler and said cap for maintaining said coupler and said cap in a seal-tight relationship.

4. The leak-detection system of claim 2, wherein said fluid circulation circuit is characterized by:
(a) a pressurized fluid supply reservoir (520) in communication with the bore defined by the canister for supplying the fluid under pressure to the bore, whereby the fluid flows into the bore, through the channel and into the cavity; and
(b) a suction pump (440) in communication with the cavity defined by said cap for suctioning the fluid from the cavity.

5. The leak-detection system of claim 4, wherein said detector assembly is characterized by:
(a) a radiation-sensitive sensor (550) in communication with said suction pump for sensing the radiation of the material carried by the fluid suctioned by said suction pump, said sensor capable of generating a sensor output signal in response to the radiation sensed thereby;
(b) an analyzer (560) connected to said sensor for receiving the sensor output signal and for providing an analysis of the sensor output signal, said analyzer adapted to generate an analyzer output signal associated with the analysis provided thereby; and
(c) a display (620) connected to said analyzer for receiving the analyzer output signal and for displaying the analyzer output signal received thereby.

6. The leak-detection system of claim 5, further characterized by a controller (610) connected to said analyzer for controlling the operation of said analyzer.

7. The leak-detection system of claim 1, further characterised by a support frame (315) connected to said enclosure for supporting said enclosure as the fuel rod enclosed therein is leak-tested.

8. A leak-detection method for detecting an individual leaking nuclear fuel rod (30) having radioactive fission product material (70) leaking therefrom, the fuel rod being submerged in a pool (45) of water, characterized by the steps of:
(a) enclosing an individual fuel rod by sealingly engaging a removable cap (260) extending over an end portion of the fuel rod with a cylindrical member (130, 180, 230) containing the balance of the fuel rod for isolating the fuel rod within an enclosure (90) from the pool of water in which the fuel rod is submerged;
(b) circulating a gaseous fluid through the enclosure by operating a fluid circulation circuit (350) connected to the enclosure, so that the water from the pool in the sealed enclosure is expulsed and fluid carries the leaking material from the fuel rod; and
(c) detecting the leaking material carried by the fluid by operating a detector assembly (540) in communication with the fluid.

9. The leak-detection method of claim 8, further characterized by the step of supporting the enclosure (90) by connecting a support frame (315) to the enclosure.

## Patentansprüche

1. Lecknachweissystem (60) zum Nachweis eines einzelnen leckenden Kernbrennstabs (30), bei welchem radioaktives Spaltspoduktmaterial (70) aus einem Riß (80) in dem Brennstab ausleckt, während der Brennstab in einem Wasserbecken (45) eingetaucht ist, gekennzeichnet durch:
a) eine Hülle (90) zum Bilden eines Hohlraumes, der den Brennstab (30) im Wasserbecken umschließt, wobei die Hülle ein zylindrisches Bauteil (130, 180, 230) mit einem offenen Ende (160) zur Aufnahme eines Teils des Brennstabs (30) sowie eine abnehmbar befestigbare Kappe (260) aufweist, die einen Hohlraum (280) mit einem offenen Ende zum dichten Zusammenwirken mit dem zylindrischen Bauteil (130, 180, 230) bildet, wenn der Brennstab (30) in den Hohlraum (280) in der Kappe (260) hineinragt,
b) einen Strömungsmittelkreislauf (350), der an die Hülle angeschlossen ist, um das Wasser aus der Hülle herauszudrücken und ein gasförmiges Medium durch die wasserentleerte Hülle zu zirkulieren, so daß das durch die Hülle zirkulierende Medium das Leckmaterial aufnimmt und das Leckmaterial vom Brennstab wegfördert, und
c) eine Detektorbaugruppe (540) in Strömungsverbindung mit dem durch den Strömungsmittelkreislauf zirkulierenden Medium zum Nachweis des von dem Medium mitgeführten Materials, so daß die Detektorbaugruppe das von dem Riß in dem Brennstab ausleckende Material nachweist.

2. Lecknachweissystem nach Anspruch 1, wobei die Hülle dadurch gekennzeichnet ist, daß das zylindrische Bauteil aufweist
a) einen länglichen Kanister (130), der eine Sackbohrung (140) bildet, welche den Brennstab umgibt, wobei die Sackbohrung ein geschlossenes Ende (150) und ein offenes Ende (160) zur Aufnahme des Brennstabs durch das offenen Ende aufweist, und
b) ein mit dem offenen Ende der von dem Kanister gebildeten Bohrung verbundenen Kupplungsstück (230), das einen durchgehenden Kanal (250) zur Aufnahme des Brennstabs und einen mit Außengewinde versehenen Teil (240) bildet,
wobei die abnehmbar befestigbare Kappe (260) auf das Kupplungsstück (230) aufgeschraubt ist, der Hohlraum (280) einen geschlossenen Endbereich (290) und einen mit Innengewinde versehenen offenen Endbereich (300) zum Zusammenwirken mit dem Außengewinde des Kupplungsstücks aufweist, wobei der Kanister, das Kupplungsstück und die Kappe miteinander zusammenwirken, um den Brennstab zu umschließen, wenn der Brennstab durch die Bohrung, durch den Kanal und in den Hohlraum hinein verläuft.

3. Lecknachweissystem nach Anspruch 2, gekennzeichnet durch eine Dichtung (310), die zwischen das Kupplungsstück und die Kappe eingelegt ist, um das Kupplungsstück und die Kappe miteinander abzudichten.

4. Lecknachweissystem nach Anspruch 2, wobei der Strömungsmittelkreislauf gekennzeichnet ist durch:
a) einen druckbeaufschlagten Strömungsmittelvorratsbehälter (520) in Verbindung mit der vom Kanister gebildeten Bohrung zum Zuführen des Mediums unter Druck in die Bohrung, wodurch das Medium in die Bohrung, durch den Kanal und in den Hohlraum strömt, und
b) eine Saugpumpe (440) in Verbindung mit dem Hohlraum, der durch die Kappe gebildet ist, um das Medium aus dem Hohlraum abzusaugen.

5. Lecknachweissystem nach Anspruch 4, wobei die Detektorbaugruppe gekennzeichnet ist durch:
a) einen strahlungsempfindlichen Fühler (550) in Verbindung mit der Saugpumpe zum Erfassen der Strahlung des von dem Medium, das von der Saugpumpe abgesaugt wird, mitgeführten Materials, wobei der Fühler in der Lage ist, ein Fühlerausgangssignal in Abhängigkeit von der erfaßten Strahlung zu erzeugen,
b) einen Analysator (560), der mit dem Fühler verbunden ist, um das Fühlerausgangssignal zu empfangen und eine Analyse des Fühlerausgangssignals zu erzeugen, wobei der Analysator dafür ausgebildet ist, ein der von ihm erstellten Analyse entsprechendes Analysatorausgangssignal zu erzeugen, und
c) eine mit dem Analysator verbundene Anzeige (620) zur Aufnahme des Analysatorausgangssignals und zum Anzeigen des empfangenen Analysatorausgangssignals.

6. Lecknachweissystem nach Anspruch 5, weiter gekennzeichnet durch eine Steuerung (610), die mit dem Analysator zur Steuerung von dessen Funktion verbunden ist.

7. Lecknachweissystem nach Anspruch 1, weiter gekennzeichnet durch einen Tragrahmen (315), der mit der Hülle verbunden ist, um die Hülle zu tragen, während ein darin eingeschlossener Brennstab leckgeprüft wird.

8. Lecknachweisverfahren zum Nachweisen eines einzelnen leckenden Kernbrennstabs (30), aus welchem radioaktives Spaltproduktmaterial (70) ausleckt, während der Brennstab in einem Wasserbecken (45) eingetaucht ist, gekennzeichnet durch folgende Schritte:
a) Umschließen eines einzelnen Brennstabs durch dichtes Aufsetzen einer abnehmbaren Kappe (260), die über einen Endteil des Brennstabs ragt, auf ein zylindrisches Bauteil (130, 180, 230), welches den Rest des Brennstabs enthält, um den Brennstab innerhalb innerhalb einer Hülle (90) vom Wasserbecken abzutrennen, in welchem der Brennstab eingetaucht ist,
b) Zirkulieren eines gasförmigen Mediums durch die Hülle durch Betreiben eines Strömungsmittelkreislaufs (350), der mit der Hülle verbunden ist, so daß das Wasser aus dem Becken in der abgedichteten Hülle herausgedrückt wird und ein Medium das ausleckende Material von dem Brennstab mitführt, und
c) Nachweisen des ausleckenden Materials, das von dem Medium mitgeführt wird, durch Betrieb einer Detektorbaugruppe (540) in Verbindung mit dem Medium.

9. Lecknachweisverfahren nach Anspruch 8, weiter gekennzeichnet durch den Schritt des Haltens der Hülle durch Verbinden eines Tragrahmens (315) mit der Hülle.

## Revendications

1. Système (60) de détection de fuite permettant de détecter une barre de combustible nucléaire particulière (30) présentant une fuite, des matières radioactives (70) issues de la fission s'échappant d'une brèche (80) de la barre de combustible quand la barre de combustible est submergée dans une piscine d'eau (45), caractérisé par :
(a) une enceinte (90) servant à définir une cavité entourant la barre de combustible (30) dans la piscine d'eau, l'enceinte comprenant un élément cylindrique (130, 180, 230) comportant une extrémité ouverte (160) destinée à recevoir une partie de la barre de combustible (30) et un couvercle (260) pouvant être fixé de manière démontable, définissant une cavité (280) avec une extrémité ouverte, destiné à se mettre en prise étanche avec l'élément cylindrique (130, 180, 230) quand la barre de combustible (30) s'étend dans la cavité (280) à l'intérieur du couvercle (260);
(b) un circuit (350) de circulation de fluide raccordé à ladite enceinte, permettant d'expulser l'eau de l'enceinte et de faire circuler un fluide gazeux dans ladite enceinte vidée de son eau afin que le fluide circulant dans ladite enceinte entraîne les matières de fuite et emporte les matières de fuite de la barre de combustible; et
(c) ensemble de détection (540) en communication avec le fluide circulant dans ledit circuit, servant à détecter les matières emportées par le fluide, afin que ledit ensemble de détection détecte les matières s'échappant de la brèche de la barre de combustible.

2. Système de détection de fuite selon la revendication 1, dans lequel ladite enceinte est caractérisée en ce que : l'élément cylindrique comprend
(a) un long récipient métallique scellé (130) délimitant un alésage borgne (140) entourant la barre de combustible, l'alésage borgne comportant une extrémité fermée (150) et une extrémité ouverte (160) permettant de recevoir la barre de combustible par l'extrémité ouverte; et
(b) un dispositif d'accouplement (230) monté à l'extrémité ouverte de l'alésage délimité par ledit récipient métallique scellé, ledit dispositif d'accouplement délimitant un canal (250) destiné à recevoir la barre de combustible et une partie filetée externe (240);
ledit couvercle démontable (260) étant fixé par vissage audit dispositif d'accouplement (230),
ladite cavité (280) comportant une partie d'extrémité fermée (290) et une partie d'extrémité ouverte taraudée (300) destinée à se visser avec le filetage dudit dispositif d'accouplement, si bien que ledit récipient métallique scellé, ledit dispositif d'accouplement et ledit couvercle coopèrent pour enfermer la barre de combustible quand elle s'étend dans l'alésage, dans le canal et dans la cavité.

3. Système de détection de fuite selon la revendication 2, caractérisé de plus par un joint d'étanchéité (310) inséré entre ledit dispositif d'accouplement et ledit couvercle pour maintenir ledit dispositif d'accouplement et ledit couvercle en relation parfaitement étanche.

4. Système de détection de fuite selon la revendication 2, dans lequel ledit circuit de circulation du fluide est caractérisé par :
(a) un réservoir (520) d'alimentation en fluide pressurisé en communication avec l'alésage délimité par le récipient métallique scellé pour apporter le fluide sous pression à l'alésage, permettant au fluide de s'écouler dans l'alésage, dans le canal et dans la cavité; et
(b) une pompe à dépression (440) en communication avec la cavité délimitée par ledit couvercle, servant à aspirer le fluide de la cavité.

5. Système de détection de fuite selon la revendication 4, dans lequel ledit ensemble de détection est caractérisé par :
(a) un détecteur de radiations (550) en communication avec ladite pompe à dépression, servant à détecter les radiations émises par les matières transportées par le fluide aspiré par ladite pompe à dépression, ledit détecteur étant capable de générer un signal de sortie de détecteur en réponse aux radiations détectées;
(b) un analyseur (560) couplé audit détecteur servant à recevoir le signal de sortie du détecteur et à fournir une analyse du signal de sortie du détecteur, ledit analyseur étant adapté pour générer un signal de sortie d'analyseur associé à l'analyse fournie; et
(c) un afficheur (620) couplé audit analyseur, servant à recevoir le signal de sortie de l'analyseur et à afficher le signal de sortie de l'analyseur reçu.

6. Système de détection de fuite selon la revendication 5, comprenant de plus un dispositif de commande (610) couplé audit analyseur et servant à commander le fonctionnement dudit analyseur.

7. Système de détection de fuite selon la revendication 1, caractérisé de plus par un cadre de support (315) fixé à ladite enceinte et servant à supporter ladite enceinte lorsque la barre de combustible qui y est enfermée subit un contrôle de recherche de fuite.

8. Procédé de détection de fuite permettant de détecter une barre de combustible nucléaire particulière (30) présentant une fuite, dont s'échappent des matières radioactives (70) issues de la fission , la barre de combustible étant submergée dans une piscine (45) d'eau, caractérisé par les étapes consistant à :
(a) enfermer une barre de combustible particulière en mettant en prise étanche un couvercle démontable (260) s'étendant au-dessus d'une partie d'extrémité de la barre de combustible avec un élément cylindrique (130, 180, 230) contenant le reste de la barre de combustible afin d'isoler la barre de combustible à l'intérieur d'une enceinte (90), de la piscine d'eau dans laquelle la barre de combustible est submergée;
(b) faire circuler un fluide gazeux dans l'enceinte en faisant fonctionner un circuit (350) de circulation de fluide raccordé à l'enceinte, afin que l'eau de la piscine se trouvant dans l'enceinte scellée soit expulsée et que le fluide emporte les matières de fuite de la barre de combustible; et
(c) détecter les matières de fuite emportées par le fluide en faisant fonctionner un ensemble de détection (540) en communication avec le fluide.

9. Procédé de détection de fuite selon la revendication 8, caractérisé de plus par l'étape consistant à supporter l'enceinte (90) en fixant un cadre support (315) à l'enceinte.
